# EUROPEAN PATENT APPLICATION

(11) **EP 4 557 446 A2**
(43) Date of publication of application: **21.05.2025**
(21) Application number: 24187822.2
(22) Date of filing: 10.07.2024
(51) Int. Cl.: H01M 10/42, H01M 10/48, H01M 50/103, H01M 50/553, H01M 50/569

(54) **RECHARGEABLE BATTERY AND RECHARGEABLE BATTERY MODULE**

(30) Priority: 16.11.2023 KR 20230159425
(71) Applicant: SAMSUNG SDI CO., LTD., Giheung-gu Yongin-si, Gyeonggi-do 17084 (KR)
(72) Inventor: MOON, Sehwan, 17084 Yongin-si (KR); HAN, Dongyun, 17084 Yongin-si (KR); LEE, Daein, 17084 Yongin-si (KR); PARK, Sangheon, 17084 Yongin-si (KR); KIM, Jiweon, 17084 Yongin-si (KR); ROH, Chanwoo, 17084 Yongin-si (KR); LEE, Yongjae, 17084 Yongin-si (KR)
(74) Representative: Marks & Clerk LLP

(57) **Abstract**

A secondary battery includes: an electrode assembly including: a first electrode; a second electrode; and a separator between the first electrode and the second electrode; a case having an opening at one or more sides to accommodate the electrode assembly in the case through the opening; one or more cap plates sealing the opening at the one or more sides of the case, respectively; and a reference electrode located in a void volume inside the case.

## Description

### BACKGROUND

### 1. Field

Aspects of embodiments of the present disclosure relate to a rechargeable battery and a rechargeable battery module.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles, and for storing power (e.g., home and/or utility scale power storage). A secondary battery generally includes an electrode assembly composed of a positive electrode and a negative electrode, a case accommodating the electrode assembly, and electrode terminals connected to the electrode assembly.

A secondary (or rechargeable) battery module may include a battery management system. The battery management system is a system that monitors a battery state, and performs diagnosis and control, communication, and protection functions. For example, the battery management system may monitor and manage a voltage, a temperature, and a current of each secondary battery cell included in the secondary battery module to ensure their normal operation, and may detect insulation and short circuit conditions.

The above information disclosed in this Background section is for enhancement of understanding of the background of the present disclosure, and therefore, it may contain information that does not constitute related (or prior) art.

### SUMMARY

A battery management system may only detect the voltage of the secondary battery cell (e.g., a difference between a positive electrode potential value and a negative electrode potential value), and thus, an accurate potential value of the positive electrode or an accurate potential value of the negative electrode may not be identified. As a result, the early detection of an abnormal state of the secondary battery cell may not be achieved in a case where the negative electrode potential value falls below zero, which may indicate that the secondary battery cell is in the abnormal state.

Embodiments of the present disclosure may be directed to a three-electrode secondary battery including a reference electrode for accurately monitoring the secondary battery for abnormalities, and a secondary battery module including the secondary battery.

The above and other aspects and features of the present disclosure will be described in more detail in, or will be apparent from, the following description of some embodiments of the present disclosure.

According to one or more embodiments of the present disclosure, a secondary battery includes: an electrode assembly including: a first electrode; a second electrode; and a separator between the first electrode and the second electrode; a case having an opening at one or more sides to accommodate the electrode assembly in the case through the opening; one or more cap plates sealing the opening at the one or more sides of the case, respectively; and a reference electrode located in a void volume inside the case.

In some embodiments, the void volume may be located inside the case between one of the one or more cap plates and the electrode assembly, and the reference electrode may be located in the void volume inside the case between the one of the one or more cap plates and the electrode assembly.

In some embodiments, the reference electrode may be spaced from the electrode assembly.

In some embodiments, the case may have a prismatic shape.

In some embodiments, the one or more sides of the case having the opening may include opposite lateral sides having side openings, and the one or more cap plates may include two side cap plates sealing the side openings at the opposite lateral sides of the case, respectively.

In some embodiments, the two side cap plates may include a first side cap plate and a second side cap plate. A first terminal electrically connected to the first electrode may be coupled to the first side cap plate, a second terminal electrically connected with the second electrode may be coupled to the second side cap plate, and a reference electrode terminal electrically connected with the reference electrode may be coupled to either the first side cap plate or the second side cap plate.

In some embodiments, the first electrode may be electrically connected to the first terminal through a first current collector located between the electrode assembly and the first side cap plate, the second electrode may be electrically connected to the second terminal through a second current collector located between the electrode assembly and the second side cap plate, and the reference electrode may be electrically connected to the reference electrode terminal through a reference electrode current collector. The reference electrode and the reference electrode current collector may be located between the electrode assembly and the first side cap plate, or may be located between the electrode assembly and the second side cap plate.

In some embodiments, the one or more sides of the case having the opening may include an upper side of the case having the opening, and the one or more cap plates may include one cap plate sealing the opening at the upper side of the case.

In some embodiments, a first terminal electrically connected with the first electrode, a second terminal electrically connected with the second electrode, and a reference electrode terminal electrically connected with the reference electrode may be coupled to the one cap plate.

In some embodiments, the reference electrode terminal may be located between the first terminal and the second terminal.

In some embodiments, the void volume may be located between the electrode assembly and the one cap plate. The first electrode may be electrically connected to the first terminal through a first current collector, the second electrode may be electrically connected to the second terminal through a second current collector, and the reference electrode may be electrically connected to the reference electrode terminal through a reference electrode current collector. The reference electrode and the reference electrode current collector may be located between the first current collector and the second current collector in the void volume between the electrode assembly and the one cap plate.

According to one or more embodiments of the present disclosure, a secondary battery module includes a cell stack including a plurality of battery cells located along one direction, the plurality of battery cells including one or more secondary batteries as defined above or below, i.e. each including: an electrode assembly including: a first electrode; a second electrode; and a separator between the first electrode and the second electrode; a case having an opening at one or more sides to accommodate the electrode assembly in the case through the opening; one or more cap plates sealing the opening at the one or more sides of the case, respectively; and a reference electrode located in a void volume inside the case.

In some embodiments, the secondary battery module may further include a battery management system electrically connected to the one or more secondary batteries, and configured to calculate at least one of a potential value of the first electrode or a potential value of the second electrode, by detecting at least one of a voltage between the reference electrode and the first electrode or a voltage between the reference electrode and the second electrode.

In some embodiments, the one or more secondary batteries may include two or more secondary batteries, at least one of the two or more secondary batteries may be located at an outermost side of the cell stack, and at least another one of the two or more secondary batteries may be located at a center of the cell stack.

According to one or more embodiments of the present disclosure, it may be possible to calculate an accurate potential value of the positive electrode and/or an accurate potential value of the negative electrode. Accordingly, it may be possible to accurately monitor the abnormality of the secondary battery, and also, to detect a soft short in the secondary battery.

According to one or more embodiments of the present disclosure, the reference electrode may be disposed in the void volume inside the case. Accordingly, the three-electrode secondary battery including the reference electrode may be implemented, without occupying an additional volume (e.g., without a decrease in energy density).

According to another aspect of the present invention there may be provided a secondary battery comprising:
an electrode assembly comprising a first electrode; a second electrode; and a separator interposed between the first electrode and the second electrode;
a case having one or more opening, or openings, at one or more sides thereof through which the electrode assembly is accommodated in the case;
one or more cap plates provided for respectively sealing the opening(s) at the one or more sides of the case, respectively; and
a reference electrode arranged in a void volume inside the case.

According to another aspect of the present invention there is provided a secondary battery module that includes a cell stack including a plurality of battery cells arranged in one direction. The cell stack may include one or more secondary batteries according to one or more embodiments of the present disclosure.

According to one embodiment, the secondary battery module described above may further include a battery management system electrically connected to the one or more secondary batteries. Further, the battery management system may calculate at least one of a potential value of the first electrode or a potential value of the second electrode by detecting at least one of a voltage between the reference electrode and the first electrode or a voltage between the reference electrode and the second electrode.

According to one embodiment, the cell stack may include two or more secondary batteries, at least one of the two or more secondary batteries may be disposed at an outermost side of the cell stack, and at least one of the two or more secondary batteries may be disposed at a center of the cell stack.

These aspects or embodiments may be in accordance with any of the previous or following aspects or embodiments.

At least some of the above and other features of the invention are set out in the claims.

However, the aspects and features of the present disclosure are not limited to those described above, and the above and other aspects and features not mentioned will be more clearly understood by those having ordinary skill in the art from the detailed description with reference to the figures, or may be learned by practicing one or more of the presented embodiments of the present disclosure.

### BRIEF DESCRIPTION OF DRAWINGS

The above and other aspects and features of the present disclosure will be more clearly understood from the following detailed description of the illustrative, nonlimiting embodiments with reference to the accompanying drawings.
FIG. 1 is a front view illustrating an example of a secondary battery according to an embodiment of the present disclosure.
FIG. 2 is a front view illustrating an example of a secondary battery according to another embodiment of the present disclosure.
FIG. 3 is a perspective view illustrating an example of a battery module according to an embodiment of the present disclosure.
FIG. 4A is a perspective view illustrating an example of a battery pack according to an embodiment of the present disclosure.
FIG. 4B is a perspective view illustrating an example of the battery pack of FIG. 4A with a housing element removed.
FIG. 5 is a diagram illustrating a method of charging and discharging the secondary battery according to an embodiment of the present disclosure.
FIG. 6 is a graph illustrating a decrease in negative electrode potential values due to a deterioration of the secondary battery.
FIG. 7 is a diagram illustrating an example of detecting an abnormal state of the secondary battery according to an embodiment of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Also, any numerical ranges disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, or in other words, having a minimum value equal to or greater than 1.0 and a maximum value equal to or less than 10.0, such as, for example, 2.4 to 7.6. Any maximum numerical limitations recited herein is intended to include all lower numerical limitations subsumed therein, and any minimum numerical limitations recited herein is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

A battery pack according to one or more embodiments of the present disclosure includes at least one battery module, and a pack housing having an accommodation space in which the at least one battery module is accommodated.

The battery module may include a plurality of battery cells and a module housing. The battery cells may be accommodated inside the module housing in a stacked form (e.g., stacked arrangement or configuration). Each battery cell may have a positive electrode terminal and a negative electrode terminal, and may be a circular type, a prismatic type, or a pouch type according to the shape of the battery. As used herein, a battery cell may also be referred to as a secondary battery, a battery, or a cell.

In the battery pack, one cell stack may constitute one module stacked in place of the battery module. The cell stack may be accommodated in an accommodation space of the pack housing, or may be accommodated in an accommodation space partitioned by a frame, a partition wall, and the like.

The battery cell may generate a large amount of heat during charging/discharging. The generated heat may be accumulated in the battery cell, thereby accelerating the deterioration of the battery cell. Accordingly, the battery pack may further include a cooling member to remove the generated heat, and thereby, suppress deterioration of the battery cell. The cooling member may be provided at the bottom of the accommodation space at where the battery cell is provided, but the present disclosure is not limited thereto, and the cooling member may be provided at the top or the side depending on the battery pack.

Exhaust gas generated inside the battery cell under abnormal operating conditions, also known as thermal runaway or thermal events, may be discharged to the outside of the battery cell. For example, the battery pack or the battery module may include an exhaust port for discharging the exhaust gas to prevent or reduce damage to the battery pack or the battery module by the exhaust gas.

The battery pack may include a battery, and a battery management system (BMS) for managing the battery. The battery management system may include a detection device, a balancing device, and a control device. The battery module may include a plurality of cells that are connected to each other in series and/or parallel. A plurality of battery modules may be connected to each other in series and/or in parallel.

The detection device may detect a state of a battery (e.g., a voltage, a current, a temperature, and/or the like) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or a module on at least one point of the battery and/or an ambient temperature.

The balancing device may perform a balancing operation of a battery module and/or cells constituting the battery module. The control device may receive state information (e.g., a voltage, a current, a temperature, and/or the like) of the battery module from the detection device. The control device may monitor and calculate the state of the battery module (e.g., the voltage, the current, the temperature, a state of charge (SOC), a life span (e.g., state of health (SOH)), and/or the like) on the basis of the state information received from the detection device. In addition, on the basis of the monitored state information, the control device may perform a control function (e.g., a temperature control, a balancing control, a charge/discharge control, and/or the like) and a protection function (e.g., over-discharge, over-charge, over-current protection, short circuit, a fire extinguishing function, and/or the like). In addition, the control device may perform a wired or wireless communication function with an external device of the battery pack (e.g., a higher level controller or a vehicle, a charger, a power conversion system, and/or the like).

The control device may control charging/discharging operations and a protection operation of the battery. As such, the control device may include a charge/discharge control unit (e.g., a charge/discharge control circuit), a balancing control unit (e.g., a balancing control circuit), and/or a protection unit (e.g., a protection circuit).

The battery management system is a system that monitors the battery state, and performs diagnosis and control, communication, and protection functions. The battery management system may calculate the charge/discharge state, may calculate battery life or state of health (SOH), a cut off, as necessary, battery power (e.g., a relay control), control thermal management (e.g., cooling, heating, and/or the like), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (e.g., when) a problem occurs in the vehicle and/or the battery system, and may include one or more relays and pre-charge relays at the positive terminal and the negative terminal, respectively.

In the pre-charge control, there may be a risk of inrush current occurring in the high-voltage capacitor on the input side of the inverter when the battery load is connected. Thus, to prevent or substantially prevent the inrush current when starting a vehicle, the pre-charge relay may be operated before connecting the main relay, and the pre-charge resistor may be connected.

The high-voltage interlock is a circuit that uses a small signal to detect whether or not all high-voltage parts of the entire vehicle system are connected, and may have a function of forcibly opening a relay if (e.g., when) an opening occurs at even one location on the entire loop.

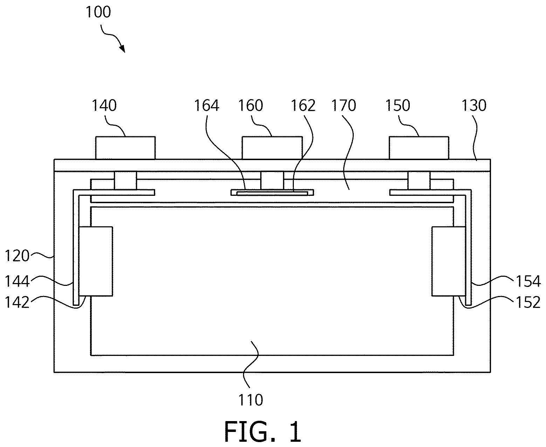

FIG. 1 is a front view illustrating an example of a secondary battery 100 according to one or more embodiments of the present disclosure.

Referring to FIG. 1, the secondary battery 100 may include at least one electrode assembly 110 having a structure in which a positive electrode and a negative electrode are wound with a separator, which is an insulator, interposed between the positive electrode and the negative electrode. The secondary battery 100 may further include a case 120 accommodating the electrode assembly 110 therein, and a cap plate 130 connected to (e.g., coupled to or attached to) one side of the case 120 that is open. The secondary battery 100 shown in FIG. 1 may be an example type of battery cell.

Each of the positive electrode and the negative electrode may include a coating region where an active material is coated onto a current collector, and an uncoated region where the active material is not coated onto the current collector. The current collector may be formed with a thin plate of a metal foil.

The positive electrode and the negative electrode may be rolled up with the separator, which is the insulator, interposed therebetween. However, the present disclosure is not limited thereto, and the electrode assembly 110 may have a structure in which a plurality of sheet-type positive and negative electrodes are stacked in an alternating manner, with separators interposed therebetween.

The case 120 may form an entire exterior of the secondary battery 100, and may include (e.g., may be made of) a conductive metal, such as aluminum, an aluminum alloy, or nickel-plated steel. The case 120 may provide a space in which the electrode assembly 110 is accommodated. In an embodiment, the case 120 may be of a prismatic shape. In this case, the secondary battery 100 may be a prismatic secondary battery.

The cap plate 130 may be engaged with the one open side of the case 120 to seal the case 120. The case 120 and the cap plate 130 may include (e.g., may be made of) a conductive material. In an embodiment, the case 120 may have an opening at an upper side thereof, and the cap plate 130 may seal and cover the upper opening of the case 120. In an embodiment, the case 120 may have a vent unit (e.g., a vent) that is formed with a notch at the bottom portion or the side portion of the case 120.

A positive electrode terminal 140 and a negative electrode terminal 150 that are electrically connected to the positive electrode and the negative electrode, respectively, may be connected to (e.g., coupled to or attached to) the cap plate 130. For example, the positive and negative electrode terminals 140 and 150 may be passed through the cap plate 130, and may be protruded outside.

The positive electrode and the positive electrode terminal 140 may be electrically connected to each other through a positive electrode current collector 144. The positive electrode current collector 144 may electrically connect the positive electrode with the positive electrode terminal 140 through a contact with a positive electrode uncoated region or a positive electrode tab 142 extending from or coupled to the positive electrode uncoated region.

The negative electrode and the negative electrode terminal 150 may be electrically connected to each other through a negative electrode current collector 154. The negative electrode current collector 154 may electrically connect the negative electrode with the negative electrode terminal 150 through a contact with a negative electrode uncoated region or the negative electrode tab 152 extending from or connected to (e.g., coupled to or attached to) the negative electrode uncoated region.

The secondary battery 100 may further include a reference electrode 162. The reference electrode 162 may include (e.g., may be composed of) a suitable material having a constant potential value, which may be determined based on the configuration (e.g., a type of the positive electrode, a type of the negative electrode, a type of an electrolyte, and/or the like) of the secondary battery 100. For example, the reference electrode 162 may include, but is not limited to, a lithium metal, a sodium metal, a potassium metal, platinum, LiFePO₄, Li₄Tl₁₅O₁₂, or the like. In more detail, in a case where the secondary battery 100 is a lithium secondary battery, the reference electrode 162 may be a lithium metal, a metal oxide containing lithium (e.g., LiFePO₄, L₁₄Tl₁₅O₁₂, and/or the like), or the like. As for the lithium secondary battery, in a case where the lithium metal is used as the reference electrode 162, the reference electrode 162 may maintain or substantially maintain a potential value of 0 V.

In a case where the reference electrode 162 maintains or substantially maintains a constant potential value, by detecting a voltage value between the reference electrode 162 and the positive electrode, or a voltage value between the reference electrode 162 and the negative electrode, an accurate potential value of the positive electrode or an accurate potential value of the negative electrode may be calculated. Accordingly, it may be possible to accurately monitor the abnormality of the secondary battery 100, and also, to detect a soft short in the secondary battery 100.

The reference electrode 162 may be disposed separately from the electrode assembly 110 in a void volume inside the case 120. In an embodiment, the reference electrode 162 may be disposed in the void volume inside the case 120 between the electrode assembly 110 and the cap plate 130. Accordingly, a three-electrode secondary battery 100 including the reference electrode 162 may be implemented without occupying an additional volume (e.g., without a decrease in the energy density).

In an embodiment, a reference electrode terminal 160, which is electrically connected to the reference electrode 162, may be connected to (e.g., coupled to or attached to) the cap plate 130. For example, the reference electrode terminal 160 may be disposed between the positive electrode terminal 140 and the negative electrode terminal 150.

The reference electrode 162 and the reference electrode terminal 160 may be electrically connected to each other through a reference electrode current collector 164. In an embodiment, the reference electrode 162 and the reference electrode current collector 164 may be disposed between the positive electrode current collector 144 and the negative electrode current collector 154 in the void volume between the cap plate 130 and the electrode assembly 110 inside the case 120.

Additionally, an insulating member 170 may be provided between the electrode assembly 110 and the cap plate 130.

The secondary battery 100 may be a lithium secondary battery, a sodium secondary battery, or the like. However, the present disclosure is not limited thereto, and the secondary battery 100 may include any suitable kind of battery capable of repeatedly providing electrical power through charging and discharging operations. In an embodiment, in a case where the secondary battery 100 is the lithium secondary battery, the secondary battery 100 may be used in an electric vehicle (EV) due to its excellent life cycle and high rate performance. For example, the lithium secondary battery may be used in a hybrid vehicle, such as a plug-in hybrid electric vehicle (PHEV). The lithium secondary battery may also be used in applications that require large amounts of power storage. For example, the lithium secondary battery can be used in an electric bicycle, a power tool, and/or other similar applications.

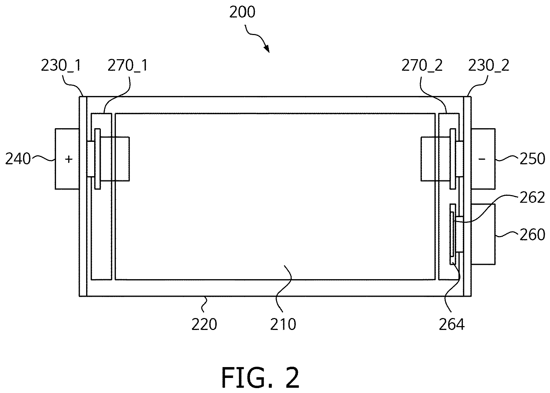

FIG. 2 is a front view illustrating an example of a secondary battery 200 according to another embodiment of the present disclosure.

The secondary battery 200 shown in FIG. 2 may be the same or substantially the same as the secondary battery 100 described above with reference to FIG. 1, except for the locations of some of the configurations therein may be different. Accordingly, hereinafter, redundant description of the same or substantially the same configurations described above with reference to FIG. 1 may be briefly described or may not be repeated, and the differences may be mainly described in more detail hereinafter.

Referring to FIG. 2, the secondary battery 200 may include at least one electrode assembly 210 having a structure in which a positive electrode and a negative electrode are wound with a separator, which is an insulator, interposed between the positive electrode and the negative electrode. The secondary battery 200 may further include a case 220 accommodating the electrode assembly 210 therein and having side openings at opposite lateral sides of the case 220, and two side cap plates 230_1 and 230_2 connected to (e.g., coupled to or attached to) the opposite lateral sides of the case 220, respectively. The secondary battery 200 shown in FIG. 2 may be an example of a type of battery cell.

The two side cap plates 230_1 and 230_2 may cover and seal the side openings at the opposite lateral sides of the case 220, respectively. For example, a first side cap plate 230_1 may cover and seal the side opening at the left side of the case 220, and a second side cap plate 230_2 may cover and seal the side opening at the right side of the case 220.

A positive electrode terminal 240 and a negative electrode terminal 250 that are electrically connected to the positive electrode and the negative electrode may be connected to (e.g., coupled to or attached to) different side cap plates 230_1 and 230_2, respectively. For example, the positive electrode terminal 240 may be connected to (e.g., coupled to or attached to) the first side cap plate 230_1, and the negative electrode terminal 250 may be connected to (e.g., coupled to or attached to) the second side cap plate 230_2. However, the present disclosure is not limited thereto, and the positions of the positive electrode terminal 240 and the negative electrode terminal 250 may be interchanged.

Additionally, the secondary battery 200 may further include a reference electrode 262. The reference electrode 262 may include (e.g., may be composed of) a suitable material having a constant potential value, which may be determined based on the configuration (e.g., a type of the positive electrode, a type of the negative electrode, a type of an electrolyte, and/or the like) of the secondary battery 200.

The reference electrode 262 and a reference electrode current collector 264 may be disposed separately from the electrode assembly 210 in a void volume inside the case 220. For example, the reference electrode 262 and the reference electrode current collector 264 may be disposed in the void volume between the second side cap plate 230_2 and the electrode assembly 210 inside the case 220, but the present disclosure is not limited thereto. In another example, the reference electrode 262 and the reference electrode current collector 264 may be disposed in the void volume between the electrode assembly 210 and the first side cap plate 230_1. Accordingly, a three-electrode secondary battery 200 including the reference electrode 262 may be implemented without occupying an additional volume (e.g., without a decrease in an energy density).

In an embodiment, a reference electrode terminal 260, which is electrically connected to the reference electrode 262 through the reference electrode current collector 264, may be connected to (e.g., coupled to or attached to) one of the side cap plates 230_1 and 230_2. For example, the reference electrode terminal 260 may be connected to (e.g., coupled to or attached to) the second side cap plate 230_2. In another example, the reference electrode terminal 260 may be connected to (e.g., coupled to or attached to) the first side cap plate 230_1. However, the present disclosure is not limited thereto.

Further, an insulating member 270_1 may be provided between the electrode assembly 210 and the first side cap plate 230_1, and an insulating member 270_2 may be provided between the electrode assembly 210 and the second side cap plate 230_2.

In an embodiment, the secondary battery 200 may be provided with a vent unit (e.g., a vent) that is formed with a notch. For example, the vent unit may be provided at the top portion of the case, the bottom portion of the case, or one of the side cap plates 230_1 and 230_2, such as the side cap plate where the reference electrode 262 is not disposed therearound.

Hereinafter, the term "reference electrode" may refer to the reference electrode itself, and/or to the reference electrode terminal electrically connected to the reference electrode.

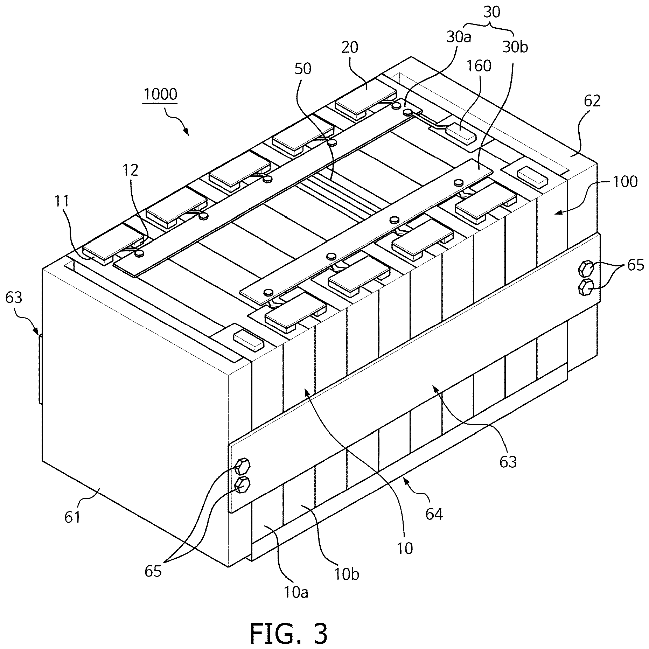

FIG. 3 is a perspective view illustrating an example of a battery module 1000 according to one or more embodiments of the present disclosure.

Referring to FIG. 3, the battery module 1000 according to an embodiment of the present disclosure includes terminal parts 11 and 12, a cell stack including a plurality of battery cells 10 arranged along one direction, connection tabs 20 connecting adjacent battery cells 10a and 10b to each other, and a protection circuit module (e.g., a protection circuit part) 30 having one end connected to the connection tabs 20.

The protection circuit module 30 may include a battery management system (BMS). Further, the connection tab 20 may include a body portion in contact with the terminal parts 11 and 12 between the adjacent battery cells 10a and 10b, and an extension portion extending from the body portion and connected to the protection circuit module 30. The connection tab 20 may include (e.g., may be), for example, a bus bar.

Each battery cell 10 may include a battery case, an electrode assembly received (e.g., accommodated) in the battery case, and an electrolyte. The electrode assembly and the electrolyte react electrochemically to store and release (e.g., generate) energy. The terminal parts 11 and 12 electrically connected to the connection tab 20 and a vent as a discharge passage for gas generated inside the battery case may be provided at (e.g., in or on) one side (e.g., an upper side) of the battery cell 10. The terminal parts 11 and 12 of the battery cell 10 may be a positive electrode terminal 11 and a negative electrode terminal 12 having different polarities from each other, and the terminal parts 11 and 12 of the adjacent battery cells 10a and 10b may be electrically connected to each other in series or in parallel by the connection tab 20, which will be described in more detail below. Although a serial connection is provided as a representative example, the connection structure is not limited thereto, and various suitable connection structures may be employed as necessary or desired. In addition, the number and the arrangement of the battery cells 10 is not limited to those shown in FIG. 3, and may be variously modified as necessary or desired.

In the cell stack, the plurality of battery cells 10 may be arranged in (e.g., may be stacked in) one direction, so that wider surfaces of the battery cells 10 face one another, and the plurality of battery cells 10 may be fixed by housings 61, 62, 63, and 64. The housings 61, 62, 63, and 64 may include a pair of end plates 61 and 62 facing the wider surfaces of the battery cells 10, and a side plate 63 and a bottom plate 64 connecting the pair of end plates 61 and 62 to each other. The side plate 63 may support side surfaces of the battery cells 10, and the bottom plate 64 may support bottom surfaces of the battery cells 10. In addition, the pair of end plates 61 and 62, the side plate 63, and the bottom plate 64 may be connected to one another by bolts 65 and/or any other suitable fastening members and methods known to those having ordinary skill in the art.

In an embodiment, the cell stack may include one or more three-electrode secondary batteries 100 including a reference electrode. The reference electrode terminal 160, which is electrically connected to the reference electrode, may be electrically connected to the protection circuit module 30 (e.g., to a first protection circuit module 30a, which will be described in more detail below).

The protection circuit module (e.g., the battery management system) 30 may calculate at least one of an accurate potential value of the positive electrode or an accurate potential value of the negative electrode of the three-electrode secondary battery 100 by detecting at least one of the voltage value between the reference electrode and the positive electrode or the voltage value between the reference electrode and the negative electrode in the three-electrode secondary battery 100. Accordingly, it may be possible to accurately monitor the abnormality of the secondary battery 100.

In an embodiment, the cell stack may include two or more three-electrode secondary batteries 100, each including the reference electrode. In this case, at least one of the three-electrode secondary batteries 100 may be disposed at the outermost side of the cell stack, and at least another one of the three-electrode secondary batteries 100 may be disposed at the center of the cell stack (e.g., at an n-th cell or an n+1 th cell in a case where the cell stack includes 2n cells, or at the n-th cell in a case where the cell stack includes 2n-1 cells, where n is a natural number). As a result, it may be possible to accurately monitor a behavior that varies (e.g., varies slightly) depending on the placement of the secondary battery in the cell stack.

The protection circuit module 30 may have one or more electronic components and one or more protection circuits mounted thereon, and may be electrically connected to the connection tabs 20, which will be described in more detail below. The protection circuit module 30 includes a first protection circuit module (e.g., a first protection circuit part) 30a and a second protection circuit module (e.g., a second protection circuit part) 30b extending along the direction in which the plurality of battery cells 10 are arranged in different locations from each other. The first protection circuit module 30a and the second protection circuit module 30b may be spaced from each other at a suitable interval (e.g., a predetermined interval), and may be arranged parallel to or substantially parallel to each other to be electrically connected to adjacent connection tabs 20, respectively. For example, the first protection circuit module 30a extends on one side of the upper portion of the plurality of battery cells 10 along the direction in which the plurality of battery cells 10 are arranged, and the second protection circuit module 30b extends on another side of the upper portion of the plurality of battery cells 10 along the direction in which the plurality of battery cells 10 are arranged. The second protection circuit module 30b may be spaced from the first protection circuit module 30a at a suitable interval (e.g., a predetermined interval), with the vents interposed therebetween, but may be disposed parallel to or substantially parallel to the first protection circuit module 30a. As such, the two protection circuit modules 30a and 30b are spaced from each other side-by-side along the direction in which the plurality of battery cells 10 are arranged, thereby reducing or minimizing the area of a printed circuit board (PCB) constituting the protection circuit module 30. By separately configuring the protection circuit module 30 into two protection circuit modules 30a and 30b, an unnecessary PCM area may be be reduced or minimized. In addition, the first protection circuit module 30a and the second protection circuit module 30b may be connected to each other by a conductive connection member 50. One side of the conductive connection member 50 is connected to the first protection circuit module 30a, and another side thereof is connected to the second protection circuit module 30b, so that the two protection circuit modules 30a and 30b may be electrically connected with each other.

The connection may be performed by any one of a soldering, a resistance welding, a laser welding, a projection welding, and/or any other suitable connection methods known to those having ordinary skill in the art.

In addition, the connection member 50 may include (e.g., may be), for example, an electric wire. In addition, the connection member 50 may include (e.g., may be made of) a suitable material having an elasticity or a flexibility. By the connecting member 50, it may be possible to check and manage whether the voltage, temperature, and/or current of the plurality of battery cells 10 are normal. For example, the information (e.g., such as the voltage, the current, and/or the temperature) received by the first protection circuit module 30a from the connection tabs 20 adjacent to the first protection circuit module 30a, and the information (e.g., such as the voltage, the current, and/or the temperature) received from the connection tabs 20 adjacent to the second protection circuit module 30b may be integrated and managed by the protection circuit module 30 through the connection member 50.

In addition, when the battery cell 10 swells, shock may be absorbed by the elasticity or the flexibility of the connection member 50, thereby, preventing or substantially preventing the first and second protection circuit modules 30a and 30b from being damaged.

However, the shape and the structure of the connection member 50 is not limited to the shape and the structure shown in FIG. 3.

As described above, because the protection circuit module 30 is provided to include the first and second protection circuit modules 30a and 30b, the area of the PCB constituting the protection circuit module may be reduced or minimized, and the space inside the battery module may be secured, which improves a work efficiency by facilitating a fastening work for connecting the connection tabs 20 and the protection circuit module 30 to each other, and repair work if (e.g., when) an abnormality is detected in the battery module.

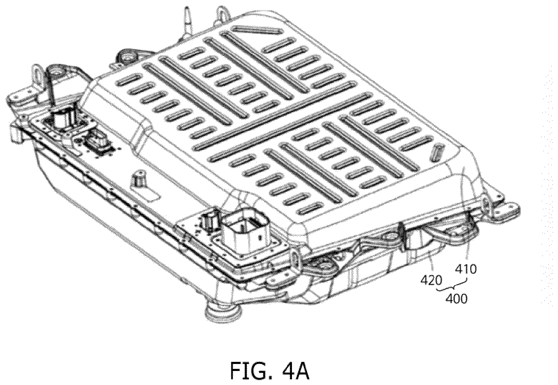

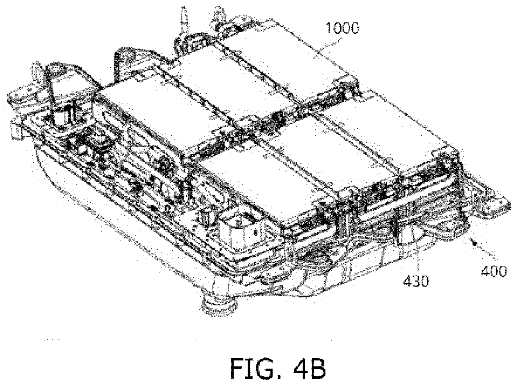

FIGS. 4A is a perspective view illustrating an example of a battery pack according to one or more embodiments of the present disclosure. FIG. 4B is a perspective view illustrating an example of the battery pack of FIG. 4A with a housing element 410 removed.

The battery pack may include a plurality of battery modules 1000, and a housing 400 for accommodating the plurality of battery modules 1000. For example, the housing 400 may include first and second housings 410 and 420 that are connected to (e.g., coupled to or attached to) each other in opposite directions through the plurality of battery modules 1000. The plurality of battery modules 1000 may be electrically connected to each other by using a bus bar 430, and the plurality of battery modules 1000 may be electrically connected to each other in a series/parallel method or a series-parallel mixed method, thereby obtaining a desired (e.g., a required) electrical output.

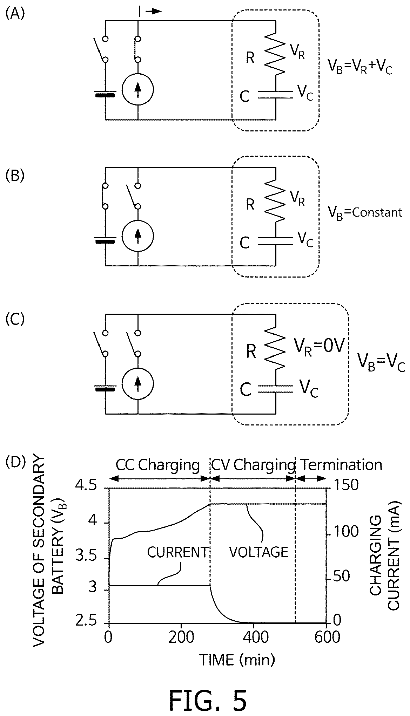

FIG. 5 is a diagram illustrating a method of charging and discharging the secondary battery according to one or more embodiments of the present disclosure. The secondary battery may be charged and discharged by, for example, a CCW charging method.

The CCCV charging method is a charging method in which a constant current (CC) charging is performed until the voltage reaches a suitable voltage or a reference voltage (e.g., a predetermined voltage), and then a constant voltage (CV) charging is performed until the amount of current flowing decreases, or in more detail, until an end current value is reached.

During the CC charging, as shown in FIG. 5-(A), a switch of a constant current power supply is turned on, and a switch of a constant voltage power supply is turned off, so that a constant current I flows through the secondary battery. During this period, because the current I is constant, a voltage VR applied to an internal resistor R is also constant according to Ohm's law (e.g., VR=R×I). In addition, a voltage VC applied to a secondary battery capacitor C increases with time. Therefore, a secondary battery voltage VB may rise over time.

When (e.g., if) the secondary battery voltage VB reaches a suitable or reference voltage (e.g., a predetermined voltage), for example, such as about 4.3 V, the CC charging is switched to the CV charging. During the CV charging, as shown in FIG. 5-(B), the switch of the constant voltage power supply is turned on, and the switch of the constant current power supply is turned off, so that the secondary battery voltage VB is constant. In this case, the voltage VC applied to the secondary battery capacitor C increases with time. Because VB = VR + VC is satisfied, the voltage VR applied to the internal resistor R decreases with time. As the voltage VR applied to the internal resistor R decreases, the current I flowing through the secondary battery may also decrease according to Ohm's law (e.g., VR=R×I).

When (e.g., if) the current I flowing through the secondary battery reaches a suitable or reference current (e.g., a predetermined current), for example, such as about 0.01 C, charging is terminated. When (e.g., if) the CCCV charging is finished, all switches are turned off and the current I becomes 0, as shown in FIG. 5-(C). At this time, the voltage VR applied to the internal resistor R becomes 0 V. Accordingly, even when a voltage drop is prevented or substantially prevented across the internal resistor R, the secondary battery voltage V_{B} may not substantively decrease.

FIG. 5-(D) shows a graph of a secondary battery voltage V_{B} and a charging current during the CCCV charging and after the CCCV charging is terminated. Even after the CCCV charging is terminated, the secondary battery voltage VB may not substantively decrease as shown in FIG. 5-(D).

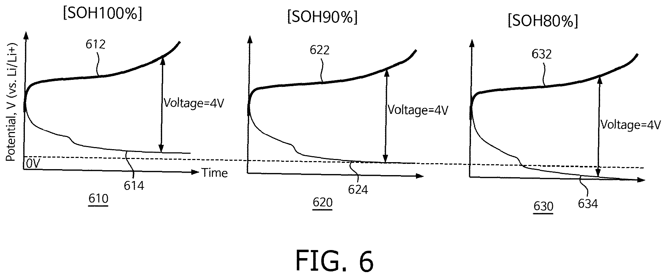

FIG. 6 is a graph illustrating a decrease in the negative electrode potential values due to the deterioration of the secondary battery.

In FIG. 6, a first example 610 is a graph illustrating a change in a positive electrode potential value 612 and a change in a negative electrode potential value 614 during the charging of the secondary battery in a case where the state of health (SOH) of the secondary battery is 100%. The difference between the positive electrode potential value 612 and the negative electrode potential value 614 represents the voltage of the secondary battery cell. As the secondary battery is charged, the positive electrode potential value 612 may increase, and the negative electrode potential value 614 may decrease, resulting in an increase in the voltage value of the secondary battery cell. In the first example 610 where the state of health of the secondary battery is 100%, the negative electrode potential value 614 may not drop below 0 V, even when the secondary battery cell is charged to a suitable voltage (e.g., a predetermined voltage), for example, such as 4 V.

In FIG. 6, a second example 620 is a graph illustrating a change in a positive electrode potential value 622 and a change in a negative electrode potential value 624 during the charging of the secondary battery in a case where the state of health (SOH) of the secondary battery is 90%. Referring to the second example 620, the graph shows that the negative electrode potential value 624 decreases due to the deterioration of the secondary battery, and the negative electrode potential value 624 approaches 0 V when the secondary battery cell is charged to a suitable voltage (e.g., a predetermined voltage).

In FIG. 6, a third example 630 is a graph illustrating a change in a positive electrode potential value 632 and a change in a negative electrode potential value 634 during the charging of the secondary battery in a case where the state of health (SOH) of the secondary battery is 80%. Referring to the third example 630, the graph shows that the negative electrode potential value 634 drops below 0 V, even before the secondary battery cell is charged to a suitable voltage (e.g., a predetermined voltage).

In a case where the negative electrode potential value drops below 0 V, a short circuit can occur, which may lead to thermal runaway or thermal events. For example, in a lithium-ion battery, when the negative electrode potential value drops below 0 V, lithium may precipitate on the surface of the negative electrode instead of the lithium ions penetrating into the active material layer (e.g., graphite). Not only can this reduce the battery capacity, but the precipitated lithium may form dendrites. This can lead to the occurrence of fine and temporary soft shorts. Further, in a case where the negative electrode potential value is maintained or substantially maintained below 0 V, the dendrites may grow and eventually cause a hard short. As a result, thermal runaway or thermal events may occur.

According to a comparative secondary battery module, the monitoring of a state of a secondary battery relies only on detecting a voltage of a secondary battery cell, which is the difference between the positive electrode potential value and the negative electrode potential value. Consequently, all of the first to third examples 610, 620, 630 may be perceived as being the same state. According to one or more embodiments of the present disclosure, the secondary battery module may include at least one secondary battery cell that includes the reference electrode. The reference electrode may allow for the accurate calculation of not only the voltage of the secondary battery cell, but also the positive electrode potential value and/or the negative electrode potential value. Accordingly, in a case where the negative electrode potential value drops below 0 V, the battery management system may promptly detect an abnormal state. This enables the early detection of not only hard shorts but also soft shorts as well.

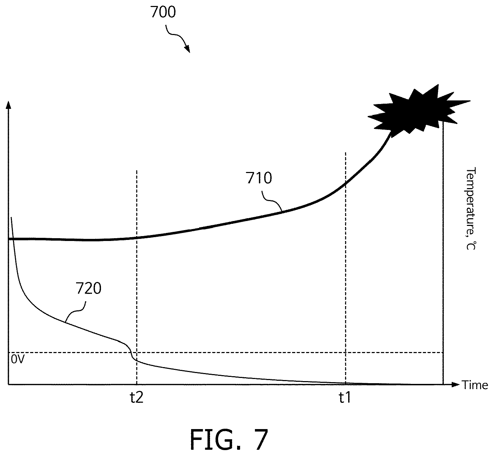

FIG. 7 is a diagram illustrating an example of detecting an abnormal state of a secondary battery according to one or more embodiments of the present disclosure.

In FIG. 7, a first example 700 is a graph illustrating a change in a temperature 710 of the secondary battery and a change in a negative electrode potential value 720. According to the comparative secondary battery module, the abnormal state may be detected by monitoring the voltage of the secondary battery or the temperature 710 of a particular portion of the secondary battery module. For example, in a case where the temperature 710 of a particular or certain portion of the secondary battery module exceeds a threshold temperature, the battery management system of the secondary battery module may detect and issue a warning for the abnormal state. However, in the case of a thermal runaway event, the temperature of the secondary battery module may rise very rapidly. In such cases, the time from when the battery management system detects and issues a warning for the abnormal state (e.g., t1) until an explosion occurs may be very short, and there may not be enough time for users to evacuate safely.

In comparison, the secondary battery module according to one or more embodiments of the present disclosure may accurately calculate and monitor not only the voltage and the temperature 710 of the secondary battery, but also the negative electrode potential value 720 of the secondary battery as well. Therefore, in a case where the negative electrode potential value 720 falls below a threshold value (e.g., 0 V), the battery management system of the secondary battery module may detect and issue a warning for the abnormal state. In this case, there may be sufficient time for the users to evacuate from the moment the battery management system detects and issues the warning for the abnormal state (e.g., at t2, where t2 < t1) until the explosion occurs. Accordingly, incidents of thermal runaway caused by internal short circuits, which accounts for the majority of safety accidents in automobiles and energy storage devices containing secondary batteries, may be detected before a rise in the temperature occurs. As a result, the detection of safety accidents may occur in advance, contributing to the prevention of safety incidents. Additionally, the improved safety may extend to the identification of subtle internal shorts (e.g., soft shorts), further enhancing the overall safety of the secondary battery.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

### Description of reference symbols

100: secondary battery
110: electrode assembly
120: case
130: cap plate
140: positive electrode terminal
142: positive electrode tab
144: positive electrode current collector
150: negative electrode terminal
152: negative electrode tab
154: negative electrode current collector
160: reference electrode terminal
162: reference electrode
164: reference electrode current collector
170: insulating member

## Claims

1. A secondary battery (100, 200) comprising:
an electrode assembly (110, 210) comprising:
a first electrode;
a second electrode; and
a separator between the first electrode and the second electrode;
a case (120, 220) having an opening at one or more sides to accommodate the electrode assembly (110, 210) in the case (120, 220) through the opening;
one or more cap plates (130) sealing the opening at the one or more sides of the case (120, 220), respectively; and
a reference electrode (162) located in a void volume inside the case.

2. The secondary battery (100, 200) as claimed in claim 1, wherein the void volume is located inside the case (120, 220) between one of the one or more cap plates (130, 230_1, 230_2) and the electrode assembly (110, 210), and
wherein the reference electrode (162, 262) is located in the void volume inside the case (120, 220) between the one of the one or more cap plates (130, 230_1, 230_2) and the electrode assembly (110, 210).

3. The secondary battery (100, 200) as claimed in claim 1 or claim 2,
wherein the reference electrode (162, 262) is spaced from the electrode assembly (110, 210).

4. The secondary battery (100, 200) as claimed in any one of the preceding claims, wherein the case (120, 220) has a prismatic shape.

5. The secondary battery (200) as claimed in any one of the preceding claims, wherein the one or more sides of the case (220) having the opening comprises opposite lateral sides having side openings, and
wherein the one or more cap plates (230_1,230_2) comprises two side cap plates (230_1, 230_2) sealing the side openings at the opposite lateral sides of the case (220), respectively.

6. The secondary battery (200) as claimed in claim 5, wherein the two side cap plates (230_1, 230_2) comprise a first side cap plate (230_1) and a second side cap plate (230_2),
wherein a first terminal (240) electrically connected to the first electrode is coupled to the first side cap plate (230_1),
wherein a second terminal (250) electrically connected with the second electrode is coupled to the second side cap plate (230_2), and
wherein a reference electrode terminal (260) electrically connected with the reference electrode (262) is coupled to either the first side cap plate (230_1) or the second side cap plate (230_2).

7. The secondary battery (200) as claimed in claim 6, wherein the first electrode is electrically connected to the first terminal (240) through a first current collector located between the electrode assembly (210) and the first side cap plate (230_1),
wherein the second electrode is electrically connected to the second terminal (250) through a second current collector located between the electrode assembly (210) and the second side cap plate (230_2),
wherein the reference electrode (262) is electrically connected to the reference electrode terminal (260) through a reference electrode current collector (264), and
wherein the reference electrode (262) and the reference electrode current collector (264) are located either between the electrode assembly (210) and the first side cap plate (230_1), or between the electrode assembly (210) and the second side cap plate (230_2).

8. The secondary battery (100) as claimed in any one of claims 1 to 4,
wherein the one or more sides of the case (120) having the opening comprises an upper side of the case (120) having the opening, and
wherein the one or more cap plates (130) comprises one cap plate (130) sealing the opening at the upper side of the case (120).

9. The secondary battery (100) as claimed in claim 8, wherein a first terminal (140) electrically connected with the first electrode, a second terminal (150) electrically connected with the second electrode, and a reference electrode terminal (160) electrically connected with the reference electrode (162) are coupled to the one cap plate (130).

10. The secondary battery (100) as claimed in claim 9, wherein the reference electrode terminal (160) is located between the first terminal (140) and the second terminal (150).

11. The secondary battery (100) as claimed in claim 9 or claim 10, wherein the void volume is located between the electrode assembly (110) and the one cap plate (130),
wherein the first electrode is electrically connected to the first terminal (140) through a first current collector (144),
wherein the second electrode is electrically connected to the second terminal (150) through a second current collector (154),
wherein the reference electrode (162) is electrically connected to the reference electrode terminal (160) through a reference electrode current collector (164), and
wherein the reference electrode (162) and the reference electrode current collector (164) are located between the first current collector (144) and the second current collector (154) in the void volume between the electrode assembly (110) and the one cap plate (130).

12. A secondary battery module (1000) comprising a cell stack comprising a plurality of battery cells (10) located along one direction, the plurality of battery cells (10) comprising one or more secondary batteries (100, 200), each comprising:
an electrode assembly (110, 210) comprising:
a first electrode;
a second electrode; and
a separator between the first electrode and the second electrode;
a case (120, 220) having an opening at one or more sides to accommodate the electrode assembly (110, 210) in the case (120, 220) through the opening;
one or more cap plates (130, 230_1, 230_2) sealing the opening at the one or more sides of the case (120, 220), respectively; and
a reference electrode (162, 262) located in a void volume inside the case (120, 220).

13. The secondary battery module (1000) as claimed in claim 12, further comprising a battery management system (30) electrically connected to the one or more secondary batteries (100, 200), and configured to calculate at least one of a potential value of the first electrode (612, 622, 632) or a potential value of the second electrode (614, 624, 634, 720), by detecting at least one of a voltage between the reference electrode (162, 262) and the first electrode or a voltage between the reference electrode (162, 262) and the second electrode.

14. The secondary battery module (1000) as claimed in claim 12, wherein the one or more secondary batteries (100, 200) comprises two or more secondary batteries (100, 200),
wherein at least one of the two or more secondary batteries (100, 200) is located at an outermost side of the cell stack, and
wherein at least another one of the two or more secondary batteries (100, 200) is located at a center of the cell stack.

15. The secondary battery module of any one of claims 12 to 14, wherein each secondary battery of the secondary battery module is in accordance with any one of claims 2 to 11.
